# EUROPEAN PATENT SPECIFICATION

(11) **EP 3 691 802 B1**
(45) Date of publication and mention of the grant of the patent: **10.12.2025**
(21) Application number: 18868029.2
(22) Date of filing: 05.10.2018
(51) Int. Cl.: B09B 3/00, C05F 9/00, F26B 3/00, B09B 5/00, C05F 9/02

(54) **ORGANIC WASTE RECYCLING MACHINE HAVING RESISTANT COLLECTOR SYSTEM**
ORGANISCHE ABFALLRECYCLINGMASCHINE MIT WIDERSTANDSFÄHIGEM SAMMLERSYSTEM
MACHINE DE RECYCLAGE DE DÉCHETS ORGANIQUES COMPORTANT UN SYSTÈME DE COLLECTEUR RÉSISTANT

(30) Priority: 05.10.2017 TR 201715061
(43) Date of publication of application: 12.08.2020
(73) Proprietor: SRST Makine Pazarlama Dis Ticaret Anonim Sirketi, Sariyer/Istanbul (TR)
(72) Inventor: YILDIRIM, Zeki, Sariyer/Istanbul (TR)
(74) Representative: Yamankaradeniz, Kemal
(86) International application number: PCT/TR2018/050558
(87) International publication number: WO 2019/078798

(56) References cited:
- WO-A1-2015/149145
- WO-A1-2015/149145
- DE-A1- 4 419 194
- KR-A- 20100 029 678
- US-A- 5 456 881
- US-A- 5 591 635
- US-A1- 2008 179 257
- US-A1- 2008 251 438
- US-A1- 2009 277 981

## Description

### The Related Art

This invention relates to organic waste recycling machine having resistant collector system providing absorption of steam occurring during process of elimination of water in the organic waste, from the container where organic waste is and cooling thereof and upon condensation of a part thereof, heating remaining steam and including into recycling (giving into container) and thus maintaining container ideal temperature at high efficiency for recycling machines providing obtaining fertilizer, compost, animal feed, bio-fuel raw materials etc. from organic wastes.

### Background of the Invention

In the related art, there are recycling machines of home type and industrial type providing obtaining fertilizer, compost, animal feed, bio-fuel raw materials etc. from organic wastes. Said recycling machines operates with principle of biological recycling of organic wastes, in general. Organic waste recycling machines basically performs the processes helping biodegradation of organic wastes and speeds up recycling process and provides creation of required ambience for obtaining fertilizer, compost etc. In order to eliminate negativities in primitive methods, solutions improving efficiency of recycling process of organic wastes and quality of obtained product are provided.

In the related art the patent document numbered US8919682 and entitled "Kitchen Waste Disposal System" discloses an organic waste recycling machine. The solutions suggested in the said document relates to grinding of the kitchen wastes before turning into fertilizer, compost etc. during recycling process ("mechanical gear grinding") and stirring at waiting containers (T-shaped paddles").

In the related art, elimination of water in the organic wastes in waste recycling machines somehow is used to speed up the process of obtaining fertilizer, compost. In this context, in the related art, utility model numbered CN202610114 and entitled "Machine for Converting Kitchen Waste into Fertilizer" discloses said solution. Said document suggests a mechanism crushing organic waste in machine tank and providing drainage of water therein. In addition, the drained water is passed through some filters so that minerals and other agents useful for fertilizer formation are regained.

In the related art, there are solutions related to absorption of gases and steams arising from degradation of organic wastes at recycling machines from tanks, containers and other chambers where organic waste is. In this context, patent document numbered US5145581 and entitled "Composting system utilizing air recirculation" suggests said solutions, in the related art. The said document suggests solutions for filtering the gases absorbed from chamber where organic waste is and thus reduction of harmful gas emission. The moisture and ammoniac in the gas absorbed from chamber is removed by means of filtering and gas undergoing filtering process is enriched with agents facilitating gas degradation and given back to chamber.

Some recycling machines in the related art have evaporation method of heating to remove the water in the organic waste. In the related art, the evaporation occurring upon heating of chamber where organic waste is, is absorbed from the chamber and discharged from the machine. In this context, patent document numbered KR1020030004963 and entitled "Equipment for Mixing and Fermenting Compost Materials Using Food and Organic Waste Containing Functional Minerals" discloses a method aiming at speeding the process of obtaining fertilized from organic wastes by means of fermentation ambience provided by feeding hot air.

In the related art the patent document numbered KR1020100029678 and entitled "Apparatus for Extinguishment of Food Garbage" discloses an organic waste recycling machine. In the said machine, the tank where organic waste is, is heated and water in the organic waste is evaporated. The gas accumulating in the tank upon heating (steam + gases released from organic waste) is absorbed and supplied to cooling unit. The gas is cooled in cooling unit and the evaporation therein is condensed and thus moist is absorbed. Then the remaining gas is filtered and then re-heated and re-fed into the tank where organic waste is. According to the document numbered KR1020100029678, the purpose of the process is to eliminate the moisture and bad odor in the remaining gas. However, the document numbered KR1020100029678 does not disclose a solution about how reheating process for remaining gas is performed. A heating element is mentioned but no solution about efficient heating of gas and heating method is disclosed.

In the related art, the patent document numbered KR1020130107101 and entitled "Food Garbage Disposal Apparatus Cultivating Food Waste Using Micro organisms to Be Used As Compost Or Fertilizer While Exhausting Purified Water and Air" discloses an organic waste recycling system. Said document discloses a solution for process of heating the chamber (container, tank etc.) where organic waste is. Said solution uses oil as heat transfer ambience in container heating process. In this embodiment, the oil ambience heated by a heating source is provided around the chamber. Thus, homogenous heating of chamber where organic waste is, is provided.

WO2015/149145A1 relates to a reactor, pertaining to the field of processing means and final destination of wastes, mainly of organic food wastes, which has been improved in relation to similar reactors and comprises: a reaction chamber; a heating system; a recirculation circuit, having, intercalated: a steam filter; a condenser; a flow generating fan; and a metal catalyst and heater, the latter providing the return flow to the reaction chamber; said recirculation system also comprising: a condensed water reservoir; a motor pump assembly; a condensed water recirculation circuit; and a condensed water disposal circuit; said heating system comprising an electric resistive assembly, composed of electrical contact resistances that are in direct contact with a wall of the reaction chamber or a microwave system located inside the reaction chamber, or a biomass combustion system, and a condenser is mounted together with the other components or as a remote unit. A collector where the steam cooled in cooling system is subjected to heating operation before re-supply of it to boiler is not mentioned here.

US2008/251438A1 relates to an apparatus for treating organic waste, and more particularly to an apparatus for rapid fermentation and drying which produces raw materials of organic compost by rapidly fermenting and drying organic waste such as livestock waste, food leftovers, and sewage sludge. Although the steam in the invention is heated before including it into circulation again, steam cooled in cooling system is not collected for heating before delivering it into boiler again.

US2009/277981 relates to a food garbage disposer, and more particularly, to a food garbage disposer improved in not only preventing an offensive odor from generating since condensed water produced in a condenser can be utilized for filtering vapor discharged out of a reaction vessel, but also automating a full operation thereof since temperature of the reaction vessel is automatically controlled to facilitate drying and decomposition of food garbage.

US5591635A relates to a method and apparatus for composting, more particularly, this invention relates to continuous and cost-effective composting of large quantities of waste material while maintaining maximum control over the reaction parameters by using closed loop air circulation.

### Brief Description of the Invention

This invention relates to organic waste recycling machine having resistant collector system providing absorption of steam occurring during process of elimination of water in the organic waste, from the container where organic waste is and cooling thereof and upon condensation of a part thereof, heating remaining steam and including into recycling (giving into container) and thus maintaining container ideal temperature at high efficiency for recycling machines providing obtaining fertilizer, compost, animal feed, bio-fuel raw materials etc. from organic wastes and it particularly consists of a solution and technical embodiment for heating of the evaporation to be returned to the container with maximum efficient.

### General Embodiment of the Invention

General embodiment and working of the organic waste recycling machine having resistant collector system is as follows:
Said recycling machine consists of at least one organic waste degradation container. The organic waste to be recycled is put into this container/containers.

In addition to organic waste, saw dust to absorb moisture and sodium bicarbonate for neutralizing acidity are added to the container/containers where organic waste is.

After pressing the start button of recycling machine, mixer in the container starts to run with the momentum from gearmotor. Thus, the organic waste in the container is ground and/or stirred. In recycling machine versions, mixer and blades may be provided together or separately.

Upon working of mixer and/or blades, heating process is started to remove the moisture (water) in the organic waste. Heating oil is used as heat transfer ambience in heating process of container having sealing. Said heating oil is heated by resistant. Direct contact between resistant and heating oil is eliminated. Upon start of heating process, the water contained in the organic waste to be recycled starts to evaporate.

The vapour generated from organic waste by heating is absorbed by means of at least one air pump (blower). Absorbed vapour is passed through air filter and supplied to separator. Vapour passing through air filter and separator is freed from bad odor and particulates.

Vapour from separator is passed through cooling system. With reducing heat in cooler, some part of vapour condenses and becomes liquid and is absorbed from recycling (system, machine cycling).

Vapour leaving cooler with reduced heat is incorporated into system again by means of air pump. The vapour from air pump passes through a machine component defined as collector, having resistance therein and providing heating the remaining vapour and supplying thereof into container again. The heated vapour in the collector is supplied to container again. Thus, the vaporization temperature in the container is maintained efficiently. This cycling continues until entire water in organic waste is evaporated. The most important feature of the invention is that the vapour follows a route in labyrinth form in the collector for heating.

In the organic waste recycling machine, the temperature indicator of the machine reads temperature around 120 °C until evaporation of water in the organic waste is completed. After most of the water is removed from the system, heating of organic waste in the container is continued. Continued heating process continues around 140 C. In this process, when temperature in the container reaches around 148 °C, machine oil heating resistors stop automatically. In this context, safety temperature limit is set as around 148 °C.

Upon heating processes, organic waste is converted into fertilizer. Upon completion of conversion into fertilizer, the resistors stop. Then the machine works at cooling phase for about 1 hour. Until completion of cooling process, machine stops automatically. After cooling phase, the fertilizer discharge gate opens automatically or manually. Upon opening of the discharge gate, the mixer rotates at low revolution rate and discharges the fertilizer inside the container.

It is likely to obtain various outcomes other than organic fertilizer at the organic waste recycling machine. If instead of saw dust wheat bran is used onto organic waste put into container, the animal feed can be obtained as outcome. In addition, bio-fuel raw material can be obtained by adding a filtering mechanism to lower part of container where organic waste is.

The most important feature of the organic waste recycling machine is that it consists of resistant collector system where the vapour to be returned to container collected and which is heated at maximum efficiency by means of following a labyrinth like route. In this context, an illustrative embodiment of the collector can be defined as follows:

Said collector body, ideally, consists of a hollow profile of rectangular shape manufactured from stainless steel and two covers. The body contains three outlet pipes. Form of said outlet pipes is designed to gain space in machine body. End of each outlet pipe contains a connection flange providing connection of pipes to the container. Collector body contains an inlet pipe providing vapour inlet into collector. Resistor used for re-heating the vapour is provided inside the collector. Said resistor is located in a cylindrical housing. Resistor housing is in a cylindrical pipe form containing more than one hole with open end. There is at least one housing holder member bearing cylindrical hole pipe defined as resistor housing to rectangular hollow profile defined as body.

Vapour (air) heated by means of resistor inside collector is supplied to container by means of three outlet pipes again. Collector providing heating of air (vapour) returning to container is designed for heating of cold air following a labyrinth like route inside collector. Labyrinth route is of the shape to provide passing of air entering collector through cylindrical hollow pipe being resistance housing and thus both heating and homogenous distribution inside the collector body. In other words, labyrinth route is provided by help of resistor housing structure. The heated air is pumped to container through three outlet pipes by means of flow pressure provided by air pump. The cover located on collector body consists of at least one hole. Temperature of air inside the collector can be measured by a temperature measurement instrument put into collector body from that hole. Working temperature of the air heated in the collector is ideally around 400 °C. Said temperature is maintained stable by means of a temperature controller. Temperature controller brings the resistor to ON/OFF position and maintains temperature stable. Temperature controller works together with heating oil resistance. If the oil heating resistors reach alarm temperature and machine stops automatically, air heating resistor also turns off.

Collector body contains two cleaning holes. Cleaning of the collector is performed through these holes. Under ordinary working conditions, said cleaning holes should be closed with stoppers.

The purpose of use of collector used in organic waste recycling machine is to minimize the energy needed to be consumed for re-heating air (vapour) cooled in cooler in the container. Before supply into container, the cooled air (vapour) is heated in collector by help of resistor and temperature is raised and thus heating of air returning from container is provided before entering container. Thus, the organic waste recycling machine's efficiency is increased and its power consumption is decreased.

In ideal embodiment, resistor used in the collector is dry air resistor. In respect to versions of the invention, number of pipes, resistors, housings etc. and quantities and places of holes may vary.

Working conditions of an illustrative version of the invention are as follows:
Recycling machine can convert around 125 kg (kilograms) of organic wastes into organic fertilizer in 12 hours under ideal conditions. In this context, around 250 kg of waste can be recycled in a day (24 hours).

Efficiency of machine is the ratio of organic fertilizer obtained as outcome from the machine to organic waste amount (in weight) put into recycling in the beginning of machine working. In such case, machine efficiency may vary depending on quantity of liquid in the organic waste. For instance, efficiency of fruit wastes such as onion, peach, watermelon consisting of too much water can be relatively low. Efficiency of wastes of bread, wheat etc. is high. In such case; taking into account the organic wastes from an average kitchen, average efficiency rate is about 30 %.

Ideal working temperature of machine is about 140 °C. Safety temperature is provided to turn off electrical resistors of the machine after generation of organic fertilizer (around 148 °C). After approx. 148 °C ma chine works at cooling stage for 1 hour under computer control.

Said temperature and efficiency values may vary subject to different versions of machine.

The invention is described in more details below with references to the figures listed below.

### Description of Figures

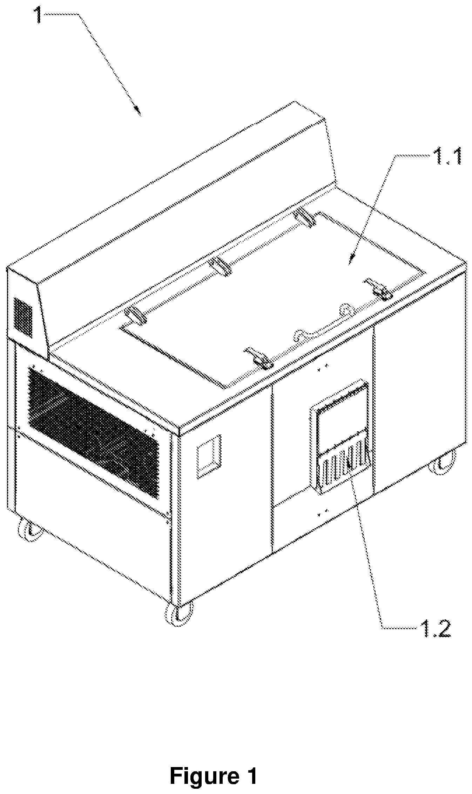

Figure 1 is general perspective view of organic waste recycling machine.

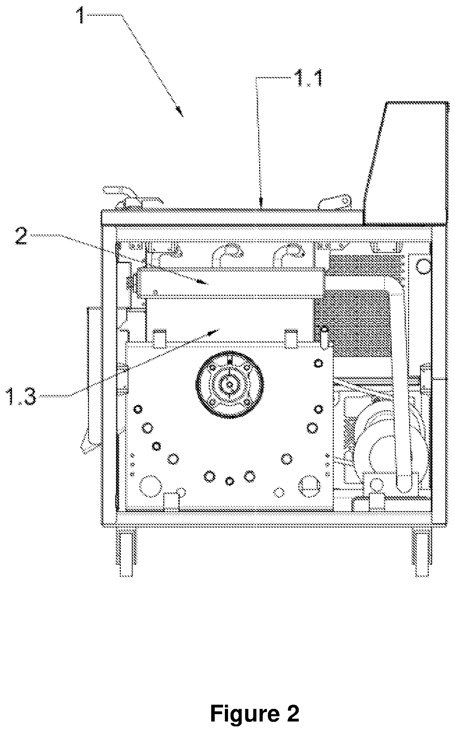

Figure 2 is side detailed view of interior part of organic waste recycling machine.

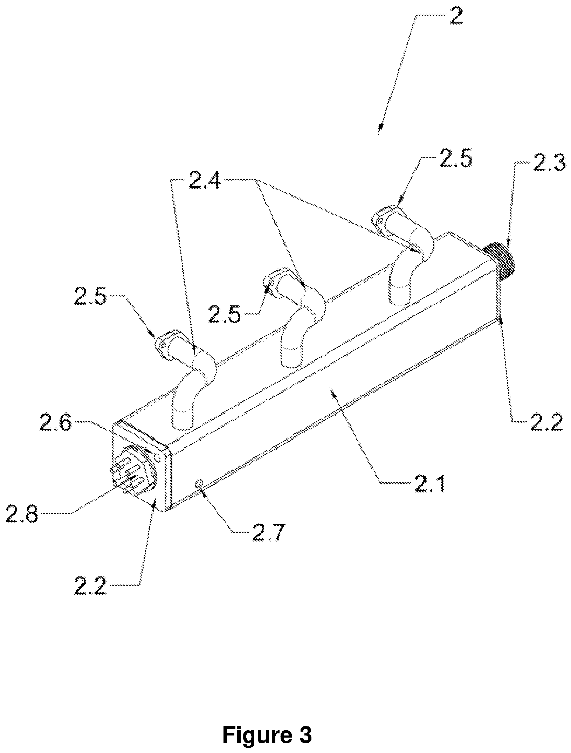

Figure 3 is general perspective view of collector embodiment.

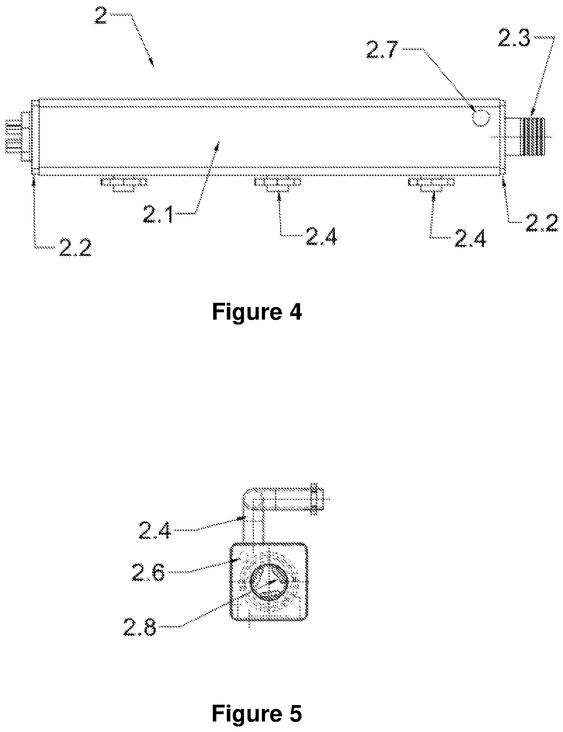

Figure 4 is general side view of collector embodiment.
Figure 5 is front detailed view of collector embodiment.

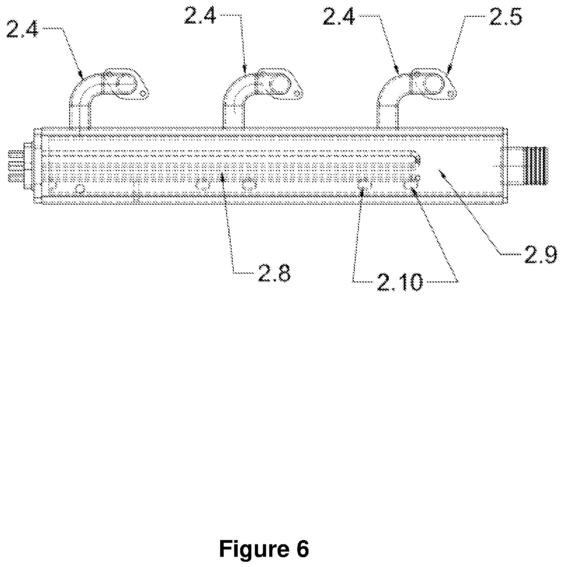

Figure 6 is top detailed view of collector embodiment.

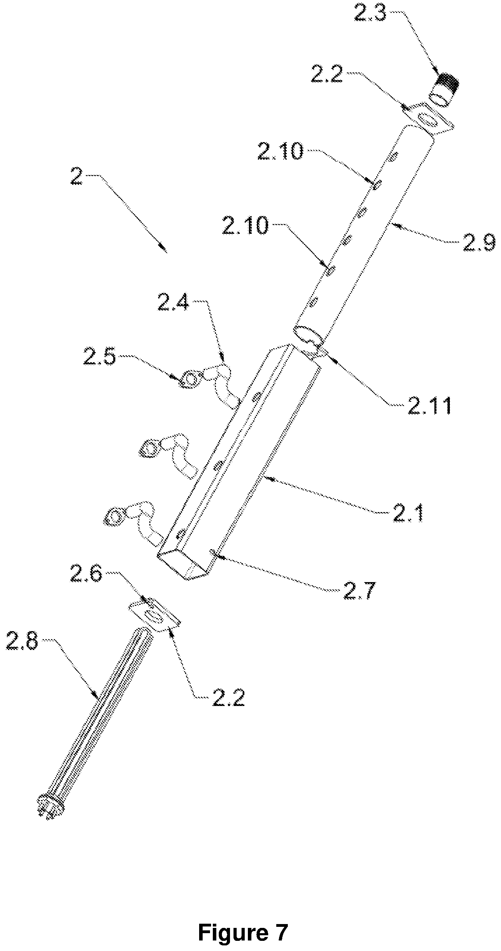

Figure 7 is exploded view of collector embodiment.

### Description of Reference Numbers

### No. PART NAME

- 1: Machine
- 1.1: Organic waste inlet cover
- 1.2: Discharge gate
- 1.3: Container
- 2.: Collector
- 2.1: Body
- 2.2: Body cover
- 2.3: Inlet pipe
- 2.4: Outlet pipe
- 2.5: Connection flange
- 2.6: Temperature measuring hole
- 2.7: Cleaning Hole
- 2.8: Resistor
- 2.9: Resistor housing
- 2.10: Hole
- 2.11: Bearing component

### Detailed Description of the Invention

This invention relates to organic waste recycling machine (1) having resistant (2.8) collector (2) system providing absorption of steam occurring during process of elimination of water in the organic waste, from the container (1.3) where organic waste is and cooling thereof and upon condensation of a part thereof, heating remaining steam and including into recycling giving into container (1.3) and thus maintaining container (1.3) ideal temperature at high efficiency for recycling machines (1) providing obtaining fertilizer, compost, animal feed, bio-fuel raw materials etc. from organic wastes and it is characterized in that it consists of
- Collector (2) providing collection of vapour cooled in cooling system for heating before re-supply to container (1.3)
- Collector (2) body (2.1) in hollow profile form and having section defined in any close geometry
- Two body cover (2.2) for closing the ends of said collector (2) body (2.1)
- At least an inlet pipe (2.3) located on one of body cover (2.2) or in any place of body (2.1) and providing inlet of vapour of which heat lowered in collector (2) body (2.1) during machine (1) cycle,
- at least a resistor (2.8) located inside collector (2) body (2.1) and providing heating of vapour coming from cooling system and entering collector (2) body (2.1) during organic waste recycling process before including in recycling again (before giving into container (1.3),
- Resistor housing (2.9) in the form of a pipe having holes (2.10) on its surface serving as housing of said resistor (2.8) and providing vapour entering in collector (2) body (2.1) by help of said holes (2.10), to follow a labyrinth route during heating process
- at least one bearing component (2.11) providing housing and positioning of resistor housing (2.9) inside collector (2) body (2.1),
- at least one outlet pipe (2.4) located on collector (2) body (2.1) and providing re-supply to the container (1.3) the vapour heated by resistor (2.8) during passing through labyrinth route path inside the collector (2),
- Connection flanges (2.5) providing connection of said outlet pipes (2.4) to the container (1.3),
- At least one temperature measuring hole (2.6) located on the collector (2) body (2.1) or body covers (2.2) and providing measurement of temperature inside the collector (2.) by a measurement instrument;
- At least one cleaning hole (2.7) located on the collector (2) body (2.1) or body covers (2.2) and providing cleaning of the collector (2.).

General embodiment and functioning of organic waste recycling machine (1) having resistor (2.8) collector (2) system is as follows:
User opens the organic waste inlet cover (1.1) on the machine and discharges the organic waste to be recycled to the container (1.3) or to containers (1.3). Additional agents can be added onto organic waste according to desired outcome. For instance, for organic fertilizer, saw dust to hold salt and sodium bicarbonate to neutralize acidity is added. Once organic waste is poured into the container (1.3) and when organic waste inlet cover (1.1) is closed, the machine (1) is run.

Upon start of the machine (1), organic waste in the container (1.3) is stirred and/ or ground by help of mixer and/or blades. Upon running of the machine (1), heating oil providing heat transfer to the container (1.3) is heated by resistors. The water (liquid) in the organic waste body is evaporated in the heated container (1.3) upon transfer of heat from heating oil. The vapour occurring in the container (1.3) is absorbed from the container (1.3) by help of an air pump. The vapour absorbed from the container (1.3) is passed through filters and separators and odour making and other harmful particulates are eliminated. Following operation of filtering, the vapour reaches cooling system. Some part of the vapour whose heat is lowered in cooling system condenses and becomes liquid and is absorbed from cycling. The remaining vapour is returned to the container (1.3) in order to continuation of cycle.

The remaining and cooled vapour is passed through the collector (2) before re-supply to the container (1.3). The cooled vapour enters the collector (2) from inlet pipe (2.3) located on one end of the collector (2) body (2.1). The vapour entering the collector (2) body (2.1) is heated by resistor (2.8) inside the resistance housing (2.9). While the vapour progress along resistance housing (2.9), it enters and leaves the holes located on the resistance housing (2.9) and thus follows a labyrinthine route. Thus, vapour temperature can be increased with maximum efficiency. Vapour heated inside the collector (2) body (2.1) is supplied into the container (1.3) via outlet pipes (2.4) in the status of connected to the container (1.3). Thus, a cycle of vapour is completed. Said cycle continues until the water (liquid) in the organic waste structure inside the container (1.3) is eliminated. Efficient re-heating the vapour supplied back to the container (1.3) increases machine (1) efficiency and reduces power consumption.

When the organic waste in the container (1.3) is converted into organic fertilizer, animal feed etc., the discharge gate (1.2) in the machine body opens and outcome in the container (1.3) is discharged from the machine (1).

Control of heating oil and temperature control of the resistors (2.8) heating vapour inside the collector (2) are provided by at least a temperature controller in the machine (1). When temperature controller detects a limit temperature (when safety temperatures are reached for each resistor (2.8)), safety system provides automatic closing of the resistors (2.8). Thus, the ambience heated by the resistor (2.8) and said resistors (2.8) work at a stable temperature.

## Claims

1. An organic waste recycling machine (1) having resistant (2.8) collector system (2) providing absorption of steam occurring during process of elimination of water in the organic waste, from the container (1.3) where organic waste is and cooling thereof and upon condensation of a part thereof, heating remaining steam and including into recycling giving into container (1.3) and thus maintaining container (1.3) ideal temperature at high efficiency for recycling machines (1) providing obtaining fertiliser, compost, animal feed, bio-fuel raw materials from organic wastes, **characterized in that**; it comprises
- collector (2) providing collection of vapour cooled in cooling system for heating before re-supply to container (1.3)
- at least a resistor (2.8) located inside collector (2) body (2.1) and providing heating of vapour coming from cooling system and entering collector (2) body (2.1) during organic waste recycling process before including in recycling again before giving into container (1.3),
- resistor housing (2.9) in the form of a pipe having holes (2.10) on its surface serving as housing of said resistor (2.8) and providing vapour entering in collector (2) body (2.1) by help of said holes (2.10) , to follow a labyrinth route during heating process.

2. An organic waste recycling machine (1) according to claim 1, and **characterized in that**; it consists of a collector (2) body (2.1) in hollow profile, having dimension defined as a close geometric shape and two body covers (2.2) providing closing of ends of said collector (2) body (2.1).

3. An organic waste recycling machine (1) according to claim 1 or claim 2, and **characterized in that**; it consists of at least an inlet pipe (2.3) located on one of body covers (2.2) or in any place of body (2.1) and providing inlet of vapour of heat lowered into collector (2) body (2.1) during machine (1) cycle,

4. An organic waste recycling machine (1) according to claim 1, and **characterized in that**; it consists of at least one bearing (2.11) providing housing and positioning of resistor housing (2.9) inside the collector (2) body (2.1).

5. An organic waste recycling machine (1) according to claim 1, and **characterized in that**; it consists of at least an outlet pipe (2.4) located on collector (2) body (2.1), providing re-supply to the container (1.3) the vapour heated by resistor (2.8) during passing through labyrinth route path inside the collector (2),

6. An organic waste recycling machine (1) according to claim 5, and **characterized in that**; it consists of connection flanges (2.5) providing connection of said outlet pipes (2.4) to the container (1.3).

7. An organic waste recycling machine (1) according to claim 1 or claim 2, and **characterized in that**; it consists of at least a temperature measuring hole (2.6) located on the collector (2) body (2.1) or body covers (2.2) and providing measurement of temperature inside the collector (2) by a measurement instrument.

8. An organic waste recycling machine (1) according to claim 1 or claim 2, and **characterized in that**; it consists of at least a cleaning hole (2.7) located on the collector (2) body (2.1) or body covers (2.2) and providing cleaning of collector (2).

9. An organic waste recycling machine (1) according to claim 1, and **characterized in that**; it consists of at least a temperature controller providing heating oil and temperature control of the resistors (2.8) heating vapour inside the collector (2) .

10. An organic waste recycling machine (1) according to claim 9, and **characterized in that**; it consists of a safety system providing automatic turn off resistors (2.8) when temperature controller detects a limit temperature when safety temperatures are reached for each resistor (2.8).

## Patentansprüche

1. Recyclingmaschine (1) für organischen Abfall mit einem widerstandsfähigen (2.8) Sammlersystem (2), die Absorption von Abdampf, der während des Prozesses der Beseitigung von Wasser in dem organischen Abfall anfällt, aus dem Behälter (1.3), in dem sich organischer Abfall befindet, und dessen Kühlung und nach Kondensation eines Teils davon, Erwärmen von Restabdampf und Einbeziehen in das Recycling, Geben in den Behälter (1.3) und somit Aufrechterhalten einer idealen Temperatur des Behälters (1.3) bei hoher Effizienz für Recyclingmaschinen (1) bereitstellend, die Erlangen von Dünger, Kompost, Tierfutter, Biokraftstoffrohmaterialien aus organischem Abfall bereitstellen, **dadurch gekennzeichnet, dass**; sie Folgendes umfasst
- einen Sammler (2), der die Sammlung von im Kühlsystem gekühltem Dampf zur Erwärmung vor der Wiederzuführung zu dem Behälter (1.3) bereitstellt,
- mindestens einen Widerstand (2.8), der sich innerhalb des Körpers (2.1) des Sammlers (2) befindet und eine Erwärmung des Dampfes bereitstellt, der aus dem Kühlsystem kommt und während des Recyclingprozesses für organischen Abfall in den Körper (2.1) des Sammlers (2) eintritt, bevor er wieder in das Recycling eingeschlossen wird, bevor er in den Behälter (1.3) gegeben wird,
- Widerstandsgehäuse (2.9) in Form eines Rohrs mit Löchern (2.10) auf seiner Oberfläche, das als Gehäuse des Widerstands (2.8) dient und Dampf bereitstellt, der mit Hilfe der Löcher (2.10) in den Körper (2.1) des Sammlers (2) eintritt, um einem Labyrinthweg während des Erwärmungsprozesses zu folgen.

2. Recyclingmaschine (1) für organischen Abfall nach Anspruch 1 und
**dadurch gekennzeichnet; dass** sie aus einem Körper (2.1) des Sammlers (2) in einem Hohlprofil mit einer Abmessung, die als eine geschlossene geometrische Form definiert ist, und zwei Körperabdeckungen (2.2) besteht, die das Schließen der Enden des Körpers (2.1) des Sammlers (2) bereitstellen.

3. Recyclingmaschine (1) für organischen Abfall nach Anspruch 1 oder Anspruch 2 und
**dadurch gekennzeichnet; dass** sie aus mindestens einem Einlassrohr (2.3) besteht, das sich an einer der Körperabdeckungen (2.2) oder an einem beliebigen Ort des Körpers (2.1) befindet und einen Einlass von Wärmedampf bereitstellt, der während des Zyklus der Maschine (1) in den Körper (2.1) des Sammlers (2) abgesenkt wird.

4. Recyclingmaschine (1) für organischen Abfall nach Anspruch 1 und **dadurch gekennzeichnet; dass** sie aus mindestens einem Lager (2.11) besteht, das das Gehäuse und die Positionierung des Widerstandsgehäuses (2.9) innerhalb des Körpers (2.1) des Sammlers (2) bereitstellt.

5. Recyclingmaschine (1) für organischen Abfall nach Anspruch 1 und **dadurch gekennzeichnet; dass** sie aus mindestens einem Auslassrohr (2.4) besteht, das sich an dem Körper (2.1) des Sammlers (2) befindet und dem Behälter (1.3) ein Wiederzuführen des durch den Widerstand (2.8) beim Durchlaufen des Labyrinthroutenwegs innerhalb des Sammlers (2) erwärmten Dampfes bereitstellt.

6. Recyclingmaschine (1) für organischen Abfall nach Anspruch 5 und **dadurch gekennzeichnet dass** sie aus Verbindungsflanschen (2.5) besteht, die die Verbindung der Auslassrohre (2.4) mit dem Behälter (1.3) bereitstellen.

7. Recyclingmaschine (1) für organischen Abfall nach Anspruch 1 oder Anspruch 2 und **dadurch gekennzeichnet; dass** sie aus mindestens einem Temperaturmessloch (2.6) besteht, das sich an dem Körper (2.1) oder den Körperabdeckungen (2.2) des Sammlers (2) befindet und eine Messung der Temperatur innerhalb des Sammlers (2) durch ein Messinstrument bereitstellt.

8. Recyclingmaschine (1) für organischen Abfall nach Anspruch 1 oder Anspruch 2 und **dadurch gekennzeichnet; dass** sie aus mindestens einem Reinigungsloch (2.7) besteht, das sich an dem Körper (2.1) oder den Körperabdeckungen (2.2) des Sammlers (2) befindet und die Reinigung des Sammlers (2) bereitstellt.

9. Recyclingmaschine (1) für organischen Abfall nach Anspruch 1 und **dadurch gekennzeichnet; dass** sie aus mindestens einer Temperatursteuerung besteht, die ein Erwärmen des Öls und eine Temperatursteuerung der Widerstände (2.8) bereitstellt, die Dampf innerhalb des Sammlers (2) erwärmen.

10. Recyclingmaschine (1) für organischen Abfall nach Anspruch 9 und **dadurch gekennzeichnet; dass** sie aus einem Sicherheitssystem besteht, das ein automatisches Abschalten der Widerstände (2.8) bereitstellt, wenn die Temperatursteuerung eine Grenztemperatur erkennt, wenn die Sicherheitstemperaturen für jeden Widerstand (2.8) erreicht sind.

## Revendications

1. Machine de recyclage de déchets organiques (1) comportant un système de collecteur (2) résistant (2.8) permettant l'absorption de la vapeur d'eau se produisant pendant le processus d'élimination de l'eau dans les déchets organiques, à partir du conteneur (1.3) où se trouvent les déchets organiques et le refroidissement de celle-ci et lors de la condensation d'une partie de celle-ci, la chauffe de la vapeur d'eau restante et l'inclusion dans le recyclage donnant dans le conteneur (1.3), ce qui permet le maintient de la température idéale du conteneur (1.3) à un rendement élevé pour les machines de recyclage (1) permettant l'obtention d'engrais, de compost, d'aliments pour animaux, de matières premières de biocarburant à partir de déchets organiques, **caractérisée en ce que** ; elle comprend
- un collecteur (2) permettant la collecte des vapeurs refroidies dans le système de refroidissement pour leur chauffe avant réalimentation vers le conteneur (1.3)
- au moins une résistance (2.8) située à l'intérieur du corps (2.1) du collecteur (2) et permettant la chauffe des vapeurs provenant du système de refroidissement et entrant dans le corps (2.1) du collecteur (2) pendant le processus de recyclage des déchets organiques avant de les inclure à nouveau dans le recyclage avant de les remettre dans le conteneur (1.3),
- un boîtier de résistance (2.9) sous la forme d'un tuyau ayant des trous (2.10) sur sa surface servant de boîtier de ladite résistance (2.8) et permettant l'entrée des vapeurs entrant dans le corps (2.1) du collecteur (2) à l'aide desdits trous (2.10), pour suivre un trajet en labyrinthe pendant le processus de chauffe.

2. Machine de recyclage de déchets organiques (1) selon la revendication 1, et
**caractérisée en ce que** ; elle se compose d'un corps (2.1) de collecteur (2) en profil creux, ayant une dimension définie comme une forme géométrique fermée et deux couvercles de corps (2.2) permettant la fermeture des extrémités dudit corps (2.1) de collecteur (2).

3. Machine de recyclage de déchets organiques (1) selon la revendication 1 ou la revendication 2, et **caractérisée en ce que** ; elle se compose d'au moins un tuyau d'entrée (2.3) situé sur l'un des couvercles de corps (2.2) ou en tout endroit du corps (2.1) et permettant l'entrée de vapeur de chaleur abaissée dans le corps (2.1) du collecteur (2) pendant le cycle de la machine (1).

4. Machine de recyclage de déchets organiques (1) selon la revendication 1, et **caractérisée en ce que** ; elle se compose d'au moins un palier (2.11) permettant le logement et le positionnement du boîtier de résistance (2.9) à l'intérieur du corps (2.1) du collecteur (2).

5. Machine de recyclage de déchets organiques (1) selon la revendication 1, et **caractérisée en ce que** ; elle se compose d'au moins un tuyau de sortie (2.4) situé sur le corps (2.1) du collecteur (2), permettant la réalimentation du conteneur (1.3) en vapeurs chauffées par la résistance (2.8) pendant la traversée du trajet en labyrinthe à l'intérieur du collecteur (2).

6. Machine de recyclage de déchets organiques (1) selon la revendication 5, et **caractérisée en ce que** ; elle se compose de brides de raccordement (2.5) permettant le raccordement desdits tuyaux de sortie (2.4) au conteneur (1.3).

7. Machine de recyclage de déchets organiques (1) selon la revendication 1 ou la revendication 2, et **caractérisée en ce que** ; elle se compose d'au moins un trou de mesure de température (2.6) situé sur le corps (2.1) ou les couvercles de corps (2.2) du collecteur (2) et permettant une mesure de la température à l'intérieur du collecteur (2) par un instrument de mesure.

8. Machine de recyclage de déchets organiques (1) selon la revendication 1 ou la revendication 2, et **caractérisée en ce que** ; elle se compose d'au moins un trou de nettoyage (2.7) situé sur le corps (2.1) ou les couvercles de corps (2.2) du collecteur (2) et permettant le nettoyage du collecteur (2).

9. Machine de recyclage de déchets organiques (1) selon la revendication 1, et **caractérisée en ce que** ; elle se compose d'au moins un régulateur de température permettant la chauffe de l'huile et la régulation de la température des résistances (2.8) chauffant les vapeurs à l'intérieur du collecteur (2).

10. Machine de recyclage de déchets organiques (1) selon la revendication 9, et **caractérisée en ce que** ; elle se compose d'un système de sécurité permettant l'arrêt automatique des résistances (2.8) lorsque le régulateur de température détecte une température limite lorsque les températures de sécurité sont atteintes pour chaque résistance (2.8).
